# EUROPÄISCHE PATENTSCHRIFT

(11) **EP 1 671 503 B1**
(45) Veröffentlichungstag und Bekanntmachung des Hinweises auf die Patenterteilung: **27.08.2008**
(21) Anmeldenummer: 04817137.5
(22) Anmeldetag: 30.09.2004
(51) Int. Cl.: H04Q 7/24, H04Q 3/00, H04Q 7/38

(54) **VERFAHREN ZUR RÜCKWÄRTSSIGNALISIERUNG EINES ZU BENUTZENDEN ÜBERTRAGUNGSDIENSTES BEI EINEM MOBILE TERMINATED - PSTN/ISDN ORIGINATED - ANRUF**
METHOD FOR REVERSE SIGNALLING OF A TRANSMISSION SERVICE WHICH IS TO BE USED DURING A MOBILE TERMINATED - PSTN/ISDN ORIGINATED - CALL
PROCEDE DE SIGNALISATION DE RETOUR D'UN SERVICE DE TRANSMISSION DISPONIBLE, LORS D'UN APPEL DE TERMINAL MOBILE D'ORIGINE RTPC/RNIS

(30) Priorität: 10.10.2003 DE 10347967
(43) Veröffentlichungstag der Anmeldung: 21.06.2006
(73) Patentinhaber: Nokia Siemens Networks GmbH & Co. KG, 81541 München (DE)
(72) Erfinder: HICKETHIER, Thomas, 13086 Berlin (DE); HOFMANN, Jens, 16552 Schildow (DE); KLEHN, Norbert, 14612 Falkensee (DE)
(86) Internationale Anmeldenummer: PCT/DE2004/002227
(87) Internationale Veröffentlichungsnummer: WO 2005/036904

(56) Entgegenhaltungen:
- WO-A-03/049477
- "3GPP TS 29.007, V5.7.0, 3rd Generation Partnership Project; Technical Specification Group Core Network; General requirements on interworking between the Public Land Mobile Network (PLMN) and the Integrated Services Digital Network (ISDN) or Public Switched Telephone Network (PSTN); Release 5" 3GPP, September 2003 (2003-09), Seiten 1-93, XP002318648 SOPHIA ANTIPOLIS, FRANCE
- T-MOBILE, SIEMENS: "NP-030431; Inter-network accounting for BS30 based services such as video telephony" TECHNICAL SPECIFICATION GROUP CN , TSG-CN NO. 21, [Online] 17. September 2003 (2003-09-17), - 19. März 2003 (2003-03-19) Seiten 1-2, XP002318649 FRANKFURT, GERMANY Gefunden im Internet: URL:http://www.3gpp.org/ftp/tsg_cn/TSG_CN/ TSGN_21/Docs/PDF/NP-030431.pdf> [gefunden am 2005-02-21]
- T-MOBILE, SIEMENS: "N3-030821, Change Request for 29.007, CR89, rev4, current version 5.7.0, backward signalling of service information between VMSC and GMSC for MTC" 3GPP TSG-CN WG3, MEETING NO. 30, [Online] 27. Oktober 2003 (2003-10-27), - 31. Oktober 2003 (2003-10-31) Seiten 1-11, XP002318650 BANGKOK, THAILAND Gefunden im Internet: URL:http://www.3gpp.org/ftp/tsg_cn/WG3_int erworking/TSGN3_30/Docs/> [gefunden am 2005-02-21]
- "3GPP TS 29.007, V5.8.0, 3rd Generation Partnership Project; Technical Specification Group Core Network; General requirements on interworking between the Public Land Mobile Network (PLMN) and the Integrated Services Digital Network (ISDN) or Public Switched Telephone Network (PSTN); Release 5" 3GPP, Dezember 2003 (2003-12), Seiten 1-94, XP002318651 SOPHIA ANTIPOLIS, FRANCE

## Beschreibung

Wenn ein Telekommunikationsendgerät einen Ruf zu einem anderen Telekommunikationsendgerät aufbaut, wobei sich das angerufene Telekommunikationsendgerät im Versorgungsbereich eines Mobilfunknetzes befindet und das anrufende Telekommunikationsendgerät sich im Versorgungsbereich eines anderen Telekommunikationsnetzes befindet, besteht generell die Möglichkeit, dass ein von dem anrufenden Telekommunikationsendgerät gewünschter Übertragungsdienst im Mobilfunknetz des angerufenen Telekommunikationsendgerätes nicht eindeutig identifizierbar ist. Die Auswahl eines konkreten übertragungsdienstes obliegt demnach dem angerufenen Telekommunikationsendgerät bzw. dem entsprechenden Teilnehmer. Der von dem angerufenen Telekommunikationsendgerät ausgewählte Übertragungsdienst wird nach dem heutigen Stand der Technik nicht allen Netzwerkknoten, die an einem aufzubauenden Ruf bzw. einer auszuführenden Datenübertragung beteiligt sind, übermittelt. In einem Mobilfunknetz bedeutet dies insbesondere, dass auch die an einem aufzubauenden Ruf beteiligten Zugangs-Mobilvermittlungsstellen, wie beispielsweise ein sogenannter "Gateway MSC (Mobile Switching Center) bzw. ein sogenannter "Gateway MSC Server", die als Verbindungsnetzknoten zwischen dem Mobilfunknetz und anderen Telekommunikationsnetzen fungieren, bei einem in das Mobilfunknetz eingehenden Ruf, das heißt einem sogenannten MTC (Mobile Terminated Call) keine Informationen bezüglich des tatsächlich zu verwendenden Übertragungsdienstes erhalten. Demnach können die Zugangs-Mobilvermittlungsstellen, wie der "Gateway MSC" bzw. der "Gateway MSC Server" keine übertragungsdienstspezifischen Funktionen ausführen. Solche übertragungsdienstspezifischen Funktionen sind beispielsweise ein Blockieren von bestimmten Übertragungsdiensten sowohl generell als auch nur für ausgewählte angeschlossene Telekommunikationsnetze oder eine Bereitstellung von Informationen über den ausgewählten Übertragungsdienst an dieser Zugangs-Mobilvermittlungsstelle bzw. an diesem Verbindungsnetzknoten, wie beispielsweise Vergebührungsinformation für eine Teilnehmer- oder Zwischennetzvergebührung.

Bisher spezifiziert das anrufende Telekommunikationsendgerät einen von ihm gewünschten Übertragungsdienst durch Setzen bestimmter Werte in einem sogenannten Bearer Capability Infor - mationselement (BC). Zusätzlich können Trägerdienste mittels einem sogenannten Low Layer Compatibility Informationselement (LLC) und Teledienste mittels einem sogenannten High Layer Compatibility Informationselement (HLC) beschrieben werden-Während LLC und HLC von an der Übertragung bzw. dem aufzubauenden Ruf beteiligten Übertragungsnetzen unverändert zwischen den Telekommunikationsendgeräten übertragen werden, hat das BC nur im jeweiligen Übertragungsnetz Gültigkeit und wird gegebenenfalls an der Netzgrenze zwischen den betroffenen Übertragungsnetzen umgewandelt. Deshalb wird auch zwischen einem PLMN-BC für das Mobilfunknetz und einem ISDN-BC für ein ISDN-Festnetz als weiteres Telekommunikationsnetz unterschieden. Mobilfunkspezifische Parameter, wie beispielsweise auch Nachrichtentypen, sind in 3GPP TS 24.008 und 3GPP TS 48.008 spezifiziert. ISDN-relevante Parameter und Werte sowie Nachrichtentypen sind in ITU-T Q.760-769 und ITU-T Q.931 zu finden.

Bei einem hier zu betrachtenden Ruf von einem Festnetz in ein Mobilfunknetz werden bislang diese Parameter bei Aufbau des Rufes in einer sogenannten IAM-Nachricht (Initial Address Message) übertragen, wie sie für den sogenannten ISUP in ITU-T Q.760-769 definiert ist. Im Allgemeinen sind diese Parameter aber nicht vollständig oder fehlen völlig. Eine Ursache dafür kann beispielsweise sein, dass das anrufende Telekommunikationsendgerät Information bezüglich der Parameter nur unvollständig zur Verfügung stellt. Die Menge der notwendigen Parameter zur Beschreibung eines Übertragungsdienstes ist für verschiedene Netze unterschiedlich definiert. Während in einem Mobilfunknetz der GSM-Standard sehr restriktiv ist und eine Vielzahl von Parametern verlangt (3GPP TS 27.001), gibt es in einem ISDN-Netz unter Verwendung des sogenannten ISUP-Regelwerks keine konkreten Festlegungen. Ferner gibt es auch unterschiedliche Produkte, die die Parameter unterschiedlich setzen. Ferner ist es denkbar, dass ein ebenfalls bei dem Rufaufbau involviertes Übertragungsnetz die Information bezüglich der Parameter nur teilweise oder gar nicht übertragen kann. Darüber hinaus ist es möglich, dass der Ruf von einem analogen Festnetz kommt (PSTN). Hier wird bei einem Rufaufbau der Übertragungsdienst nicht signalisiert. In analogen Netzen wird ein Ruf aufgebaut und dann bei Beginn der Übertragung der Übertragungsdienst gekennzeichnet. Die Telekommunikationsendgeräte tauschen dazu Signaltöne aus, wie man es beispielsweise bei einer Faxübertragung hören kann. Beim Übergang von einem analogen zu einem digitalen Telekommunikationsnetz wird dann oft ein BC erzeugt, in dem dann beispielsweise nur die Information "3.1 kHz Audio" steht. Deshalb ist das BC unvollständig.

Ein Mobilfunknetz, wie beispielsweise ein GSM- oder ein UMTS-Netz, bei dem ein Ruf eingeht, kennt bereits verschiedene Verfahren, einen von einem anrufenden Telekommunikationsendgerät gewünschten Übertragungsdienst zu identifizieren. Zum einen gibt es dabei ein sogenanntes "Multinumbering-Verfahren". Dabei wird der Übertragungsdienst über eine entsprechende Rufnummer identifiziert, da hier jedem Übertragungsdienst, den das Telekommunikationsendgerät bzw. der entsprechende Teilnehmer befugt ist zu benutzen, eine eigene Rufnummer im Mobilfunknetz zugeordnet wird. Ein sogenanntes "Home Location Register (HLR)" im Mobilfunknetz verwaltet die den jeweiligen Übertragungsdiensten zugeordneten Rufnummern und speichert dazugehörige PLMN-BCs. Das zu der einem bestimmten Übertragungsdienst zugeordneten Rufnummer gehörige PLMN-BC wird zum angerufenen Telekommunikationsendgerät übertragen. Das heißt, dass das dem identifizierten Übertragungsdienst zugeordnete PLMN-BC dem angerufenen Telekommunikationsendgerät über eine Ziel-Mobilvermittlungsstelle, eine sogenannten "Visited MSC" bzw. über einen "Visited MSC Server" mitgeteilt wird. Die dabei passierten Zugangs-Mobilvermittlungsstellen, nämlich eine sogenannte "Gateway MSC" bzw. ein sogenannter "Gateway MSC Server" können dabei optional über den jeweiligen Übertragungsdienst informiert werden. Ihnen wird dabei ein für den jeweiligen Übertragungsdienst spezifischer Code zugestellt. Diese Vorgehensweise ist beispielsweise in 3GPP TS 29.002 beschrieben. Allerdings beschreibt dieser Code den betreffenden Übertragungsdienst nicht hinreichend genau, um übertragungsdienstspezifische Funktionen an der "Gateway MSC" bzw. dem "Gateway MSC Server" bereitstellen zu können. Der Code ist deshalb zu ungenau, da er keine Aussagen macht über eine durch den aufzubauenden Ruf geforderte Ressourcen-Belegung im Mobilfunknetz. Ferner müssen verschiedene Übertragungsdienste unterschieden werden, die den gleichen Code tragen. Hier sind beispielsweise ein allgemeiner synchroner Übertragungsdienst und ein synchroner Übertragungsdienst für Mulitmedia zu nennen - beide tragen den Code für BS30, wie er in 3GPP TS 22.002 und 3GPP TS 29.002 definiert ist.

Ferner gibt es ein sogenanntes "Singlenumbering-Verfahren", bei welchem versucht wird, aus einem ISDN-BC ein PLMN-BC abzubilden. Allerdings ist diese Verfahrensweise nicht immer erfolgreich, weil beispielsweise das ISDN-BC unvollständig oder zu ungenau ist. Das angerufene Telekommunikationsendgerät erhält dann keine Information über den gewünschten Übertragungsdienst, mit Ausnahme eines eventuellen unvöllständigen Backup-BCs, wie dies in 3GPP TS 24.008 und 3GPP TS 29.007 erläutert ist. Den zu verwendenden Übertragungsdienst für den aufzubauenden Ruf wählt dann letztendlich das angerufene Telekommunikationsendgerät aus.

In beiden beschriebenen Verfahren ist es jedoch so, dass Parameter, die den zu benutzenden Übertragungsdienst definieren, zwischen der sogenannten "Visited MSC" bzw. dem sogenannten "Visited MSC Server" und dem angerufenen Telekommunikationsendgerät verhandelt werden. Dies ist in 3GPP TS 27.001 und 3GPP TS 29.007 beschrieben. Nach Erhalt der sogenannten "assignment complete"-Nachricht liegt in der "Visited MSC" bzw. dem "Visited MSC Server" die Information über den zu verwendenden Übertragungsdienst vor. Somit sind nach dem heutigem Stand der Technik die vollständige Information über den zu benutzenden Übertragungsdienst nur in der "Visited MSC" bzw. dem "Visited MSC Server" nach Erhalt der sogenannten "call complete"-Nachricht vom dem angerufenen Telekommunikationsendgerät und nach Erhalt der "assignment complete"-Nachricht von dem sogenannten BSS (Base Station System) verfügbar.

Die Erfindung geht als Stand der Technik von der Internetver-öffentlichung 3GPP TS 29.007 V5.7.0 (2003-09) aus und betrifft demzufolge ein Verfahren zur Rückwärtssignalisierung eines bei einem aus einem ersten Telekommunikationsnetz aufzubauenden Ruf zu benutzenden Übertragungsdienstes, bei dem ein mobiles Endgerät im Versorgungsbereich einer Ziel-Mobilvermittlungsstelle eines digitalen Mobilfunknetzes über eine Zugangs-Mobilvermittlungsstelle aus dem ersten Telekommunikationsnetz angerufen wird und den zu benutzenden Übertragungsdienst vollständig beschreibende Informationen zwischen dem mobilen Endgerät und der Ziel-Mobilvermittlungsstelle des digitalen Mobilfunknetzes ausgehandelt und in der Ziel-Mobilvermittlungsstelle hinterlegt werden, wobei die den zu benutzenden Übertragungsdienst vollständig beschreibenden Informationen zumindest ein PLMN-BC Informationselement umfassen.

Aufgabe der vorliegenden Erfindung ist es, ein Verfahren bereitzustellen , mit dessen Hilfe es möglich ist, eine vollständige Information über einen für einen in einem Mobilfunknetz eingehenden aufzubauenden Ruf zu verwendenden Übertragungsdienst einer Zugangs-Mobilvermittlungsstelle in dem Mobilfunknetz, wie beispielsweise einer "Gateway MSC" oder einem "Gateway MSC Server", wie sie in 3GPP TR 21.905 und 3GPP TS 23.002 beschrieben sind, mitzuteilen.

Gelöst wird diese Aufgabe bei dem oben angegebenen Verfahren erfindungsgemäß dadurch, dass in der Ziel-Mobilvermittlungsstelle das PLMN-BC Informationselement der den zu benutzenden Übertragungsdienst vollständig beschreibenden Informationen in ein ISUP-konformes ISDN-BC-Informationselement umgewandelt wird und die den zu benutzenden Übertragungsdienst vollständig beschreibenden Informationen mit dem ISUP-konformen ISDN-BC Informationselement mittels mindestens einer ISUP-Nachricht zumindest zu der in den aufzubauenden Ruf involvierten Zugangs-Mobilvermittlungsstelle unter Bewirken der Rückwärtssignalisierung transportiert werden.

Zwar wurde in einem Dokument NP-030431 über "internetwork accounting for BS30-based services such as video" auf dem Standardisierungstreffen TSG CN-#-21 vom 17-19.9.2003 ein Verfahren vorgestellt, mit dessen Hilfe Vergebührungsinformationen an eine Netzgrenze zwischen einem Mobilfunk- und einem Festnetz bereitgestellt werden können, jedoch macht dieses Verfahren Gebrauch von scheinbar unbenutzten Bits eines Parameters "optional Backward Call Indication", der in den sogenannten ISUP-Nachrichten "Address Complete Message (ACM)" oder "Answer Message (ANM)" enthalten ist. Dieses Verfahren ist aber zur Lösung der oben angegebenen Aufgabe nicht einsetzbar, da die 4 freien Bits des Parameters "Optional Backward Call Indication" unzureichend sind, um alle geforderten übertragungsdienstspezifischen. Funktionen an einer "Gateway MSC" bzw. einem "Gateway MSC Server" bereitstellen zu können. Ferner werden diese Bits bereits in einigen nationalen Anwendungen verwendet und stehen demnach nicht uneingeschränkt zur Verfügung.

In einer besonders bevorzugten Ausführungsform des erfindungsgemäßen Verfahrens wird als erstes Telekommunikationsnetz ein ISDN-, ein PSTN- oder ein Mobilfunknetz (PLMN) verwendet. Bei dem digitalen Mobilfunknetz handelt es sich vorzugsweise um ein GSM- oder UMTS-Netz. Das Verfahren ist auf Rufe anwendbar, bei denen ein mobiles Telekommunikationsend gerät im Versorgungsbereich dieses digitalen Mobilfunknetzes angerufen wird. Man spricht dabei von sogenannten "mobile terminated calls".

Das erfindungsgemäße Verfahren erlaubt es, die den zu benutzenden Übertragungsdienst vollständig beschreibenden Informationen von der Ziel-Mobilvermittlungstelle, wie beispielsweise einer "Visited MSC" bzw. eines "Visited MSC Servers" zumindest zu einer Zugangs-Mobilvermittlungsstelle, wie beispielsweise einer "Gateway MSC" bzw. einem "Gateway MSC Server" zu transportieren. Die den zu benutzenden Übertragungsdienst vollständig beschreibenden Informationen umfassen:
- ein in ein ISDN-BC Informationselement umgewandeltes PLMN-BC Informationselement, souie berorzugt
- eine LLC und/oder HLC.

Gemäß dem erfindungsgemäßen Verfahren werden die den zu benutzenden Übertragungsdienst vollständig beschreibenden Informationen mittels mindestens einer ISUP-Nachricht, bevorzugt nämlich mittels einer sogenannten "Address Complete Message (ACM)", einer sogenannten "Answer Message (ANM)", einer sogenannten "Connect Message (CON)" oder einer "Call Progress Message (CPG)" zur der Zugangs-Mobilvermittlungsstelle transportiert. Vorzugsweise wird dabei ein optionaler Parameter, ein sogenannter "Access Transport" verwendet. Das bedeutet, dass die den zu benutzenden Übertragungsdienst vollständig beschreibenden Informationen in einem optionalen Parameter "Access Transport" der mindestens einen ISUP-Nachricht hinterlegt werden bzw. zur Verfügung gestellt werden.

In einer weiteren bevorzugten Ausführungsform des erfindungsgemäßen Verfahrens werden die den zu benutzenden Übertragungsdienst vollständig beschreibenden Informationen in der Zugangs-Mobilvermittlungsstelle ausgewertet, um darin enthaltene übertragungsdienstspezifische Funktionen ausführen zu können.

In einer anderen bevorzugten Ausführungsform des erfindungsgemäßen Verfahrens werden die den zu benutzenden Übertra - gungsdienst vollständig beschreibenden Informationen zusätzlich zu anderen in dem aufzubauenden Ruf involvierten Netzwerkknoten des digitalen Mobilfunknetzes oder des ersten Telekommunikationsnetzes transportiert. Das bedeutet, dass die den zu benutzenden Übertragungsdienst vollständig beschreibenden Informationen über die Netzwerkgrenze des Mobilfunknetzes hinaus transportiert werden können. Dies könnte beispielsweise zur Vergebührung genutzt werden. Für einen Ruf bezahlt ein Teilnehmer des entsprechenden anrufenden TeLekommunikationsendgerätes. Er wird von einem für ihn zuständigen Netzbetreiber vergebührt. Zwischen den einzelnen Netzbetreibern gibt es Abkommen, wie ein jeweiliger Ziel-Netzbetreiber für seine Leistungen entlohnt wird. Nun gibt es Dienste, wie beispielsweise Video, bei denen der jeweilige Ziel-Netzbetreiber wesentlich mehr Ressourcen bereitstellen muss als für normale Telephonie. Für derartige Dienste sollen seitens des Ziel-Netzbetreibers auch höhere Gebühren anfallen. Um solche Situationen nachzuweisen, das heißt, die Ausführung eines derartigen Dienstes, kann der Ziel-Netzbetreiber diesbezügliche Informationen des Übergangsdienstes über seine eigene Netzwerkgrenze hinaus zu dem für den anrufenden Teilnehmer zuständigen Netzbetreiber durchstellen.

Vorzugsweise werden die den zu benutzenden Übertragungsdienst vollständig beschreibenden Informationen von anderen in dem Ruf involvierte Netzwerkknoten innerhalb des Mobilfunknetzes transparent übertragen, das heißt ohne Veränderungen, wenn die den zu benutzenden Übertragungsdienst vollständig beschreibenden Informationen der Zugangs-Mobilvermittlungsstelle, das heißt insbesondere der "Gateway MSC" bzw. dem "Gateway MSC Server" zur Verfügung gestellt werden sollen.

Zudem können aber auch diese involvierten Netzwerkknoten die den zu benutzenden Übertragungsdienst vollständig beschreibenden Informationen auswerten, um übertragungsspezifische Funktionen ausführen zu können.

Die Zugangs-Mobilvermittlungsstelle, insbesondere die "Gateway MSC" bzw. der "Gateway MSC Server" kann die somit rückwärts signalisierten den zu benutzenden Übertragungs dienst vollständig beschreibenden Informationen dazu benutzen, den weiteren Rufaufbau zu beeinflussen oder diese Informationen anderen Netzwerkelementen zur Verfügung zu stellen. Diese Informationen können auch in entsprechenden Vergebührungsdaten, die in einem Netzwerkknoten generiert werden, hinterlegt werden.

In einer weiteren bevorzugten Ausführungsform des erfindungsgemäßen Verfahrens umfassen die den zu benutzenden Übertragungsdienst vollständig beschreibenden Informationen ein Low Layer Compatibility Informationselement (LLC) oder ein High Layer Compatibility Informationselement. Ein BC kann dabei mit einem LLC (für Trägerdienste, wie beispielsweise einer Datenübertragung mit einem Modem) oder mit einem HLC (für Teledienste, wie beispielsweise bei einem Facsimile) gekoppelt sein.

Mittels des erfindungsgemäßen Verfahrens ist es möglich, dass die Zugangs-Mobilvermittlungsstelle, wie beispielsweise eine "Gateway MSC" bzw. ein "Gateway MSC Server" den zu benutzenden Übertragungsdienst vollständig beschreibenden Informationen erhält. Das erfindungsgemäße Verfahren nutzt dabei vorzugsweise die Möglichkeit der ISUP-Signalisierung, die zwischen den beteiligten Komponenten installiert ist. Ein Umwandeln eines PLMN-BC Informationselementes in ein ISDN-BC Informationselement ist eine vorhandene Funktionalität einer Zugangs-Mobilvermittlungsstelle, wie einer MSC bzw. eines MSC Servers. Diese Funktionalität wird aber bislang nicht für eine Rückwärtssignalisierung eines zu benutzenden Übertragungsdienstes verwendet.

Ebenso ist in dem ISUP-Regelwerk die Möglichkeit beschrieben, sowohl ein ISDN-BC Informationselement wie auch die Informationselemente LLC und HLC in dem optionalen Parameter "Access Transport" der ISUP-Nachrichten "Address Complete Message", "Answer Message", "Connect Message" oder "Call Progress Message" zu transportieren. Demgegenüber fordert ein Transport eines PLMN-BC Informationselementes eine Erweiterung des ISUP-Regelwerks. Der Transport von nicht ISUP spezifischen Elementen ist im ISUP Regelwerk derzeit noch nicht vorgesehen. Das ISUP Regelwerk müsste dahingehend erweitert werden, dass der Transport von nicht ISUP spezifischen Elementen, insbesondere eines PLMN-BC Elements, vorzugsweise im Parameter "Access Transport" erlaubt wird. Hier ergibt sich der Vorteil, dass mobilfunkspezifische Parameter bereitgestellt werden können. Dies ist besonders wertvoll, wenn es um das Erfordernis eines Nachweises belegter Ressourcen geht, wie beispielsweise einer Anzahl benutzter Radiokanäle, einer benutzten Kanalkodierung oder einer benutzten RadioÜbertragungsrate. Diese Möglichkeit eines Transports der genannten Informationselemente wird aber gegenwärtig nicht für eine Rückwärtssignalisierung eines tatsächlich benutzen Übertragungsdienstes eines aufzubauenden Rufes zwischen einer "Visited MSC" bzw. eines "Visited MSC Servers" zu einer "Gateway MSC" bzw. einem "Gateway MSc Server" verwendet.

Mittels der den zu benutzenden Übertragungsdienst vollständig beschreibenden Informationen kann die "Gateway MSC" bzw. der "Gateway MSC Server" beispielsweise den weiteren Rufaufbau beeinflussen, beispielsweise den Rufaufbau verhindern. Ferner ist es dadurch möglich, die den zu benutzenden Übertragungsdienst vollständig beschreibenden Informationen an angeschlossene Netzwerkelemente in anderen Telekommunikationsnetzen weiterzuleiten oder auch die den zu benutzenden Übertragungsdienst vollständig beschreibenden Informationen anderweitig zur Verfügung zu stellen, wie beispielsweise für Vergebührungsdaten.

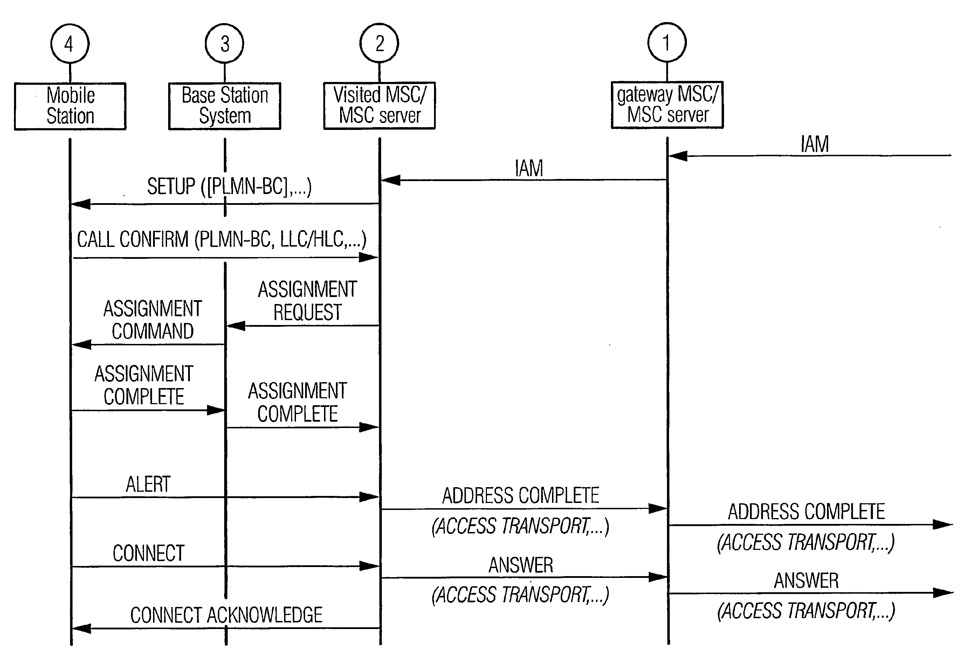

Weitere Vorteile des erfindungsgemäßen Verfahrens werden anhand der folgenden Figur näher erläutert. Es zeigt
Figur 1 Schematische Darstellung eines Ablaufs einer Ausführungsform des erfindungsgemäßen Verfahrens

In Figur 1 ist ein Ablauf einer Ausführungsform des erfindungsgemäßen Verfahrens schematisch dargestellt. Gezeigt ist eine Zugangs-Mobilvermittlungsstelle 1 eines digitalen Mobilfunknetzes, hier eine "Gateway MSC" bzw. ein "Gateway MSC Server". Ferner ist eine Ziel-Mobilvermittlungsstelle 2, hier eine "Visited MSC" bzw. ein "Visited MSC Server", ein Base Station System (BSS) 3 und eine Mobilstation 4 gezeigt. Der Übersichtlichkeit wegen wurden nur die Netzwerkelemente dargestellt, die für den Ablauf des Verfahrens wesentlich sind. Die Mobilstation 4 wird nun von einem außerhalb des Mobilfunknetzes sich befindenden, hier nicht dargestellten Telekommunikationsendgerät angerufen, das heißt es handelt sich um einen in das Mobilfunknetz eingehenden Ruf, einen sogenannten "Mobile Terminated Call". Dabei wird eine IAM-Nachricht (Initial Address Message) zu der Zugangs-Mobilvermittlungsstelle 1 gesendet, um eine Belegung für einen eingehenden Ruf einzuleiten. Die IAM-Nachricht ist eine spezifische Nachricht des ISUP (ISDN User Part), die den gewünschten Übertragungsdienst beschreibende Informationen transportiert. Die Zugangs-Mobilvermittlungsstelle 1 leitet die IAM-Nachricht weiter an die Ziel-Mobilvermittlungsstelle 2. Die Ziel-Mobilvermittlungsstelle 2 erzeugt, wenn möglich, ein mobilfunkspezifisches Bearer Capability Informationselement PLMC-BC. Diesbezügliche Verfahren und Hindernisse wurden bereits vorgehend beschrieben. Die Ziel-Mobilvermittlungsstelle 2 sendet daraufhin eine Aufbau- bzw. Installationsnachricht, das heißt eine "setup"-Nachricht, die gegebenenfalls ein PLMN-BC enthält, an die Mobilstation 4. Die Mobilstation 4 kann das erhaltene PLMN-BC nach definierten Regeln modifizieren bzw. muss ein vollständiges PLMN-BC generieren und bereitstellen, wenn die Ziel-Mobilvermittlungsstelle 2 nicht in der Lage war, ein PLMN-BC zu erzeugen. Die Mobilstation 4 antwortet mit einer Bestätigungsnachricht "Call Confirm". Diese Bestätigungsnachricht umfasst unter anderem ein mobilfunknetzspezifisches Bearer Capability Informationselement PLMN-BC, womit mobilfunkspezifische Parameter an die Ziel-Mobilvermittlungsstelle 2 übertragen werden. Außerdem stellt die Mobilstation 4 dienstabhängig ein LLC oder HLC bereit. Die Ziel-Mobilvermittlungsstelle 2 sendet ferner eine "Assignment Request"-Nachricht an die BSS 3, das heißt eine Belegungsanforderungsnachricht für den aufzubauenden Ruf. Die BSS 3 leitet daraufhin eine "Assignment Command"-Nachricht weiter an die Mobilstation 4. Die Mobilstation 4 antwortet mit einer "Assignment Complete"-Nachricht, um die Belegung zu bestätigen. Diese Nachricht wird über die BSS 3 an die Ziel-Mobilvermittlungsstelle 2 weitergeleitet. Jetzt besitzt die Ziel-Mobilvermittlungsstelle 2 alle den zu benutzenden Übertragungsdienst vollständig beschreibenden Informationen und kann sie für die Übertragung zur Zugangs-Mobilvermittlungsstelle 1 aufbereiten. Dafür kann sie das PLMN-BC verwenden oder kann das PLMN-BC in ein ISUP-konformes ISDN-BC umwandeln. Außerdem können ein LLC bzw. ein HLC bereitgestellt werden. Werden seitens der Mobilstation 4 in einer sogenannten "Alert"-Nachricht, das heißt der entsprechende Teilnehmer wird angerufen, und in einer "Connect " -Nachricht, das heißt der Teilnehmer hat den Ruf angenommen, die Annahmebereitschaft für einen Ruf signalisiert, sendet die Ziel-Mobilvermittlungsstelle 2 daraufhin eine "Address Complete"-Nachricht und eine "Answer"-Nachricht an die Zugangs-Mobilvermittlungsstelle 1. Was in Figur 1 aus Gründen der Übersichtlichkeit nicht gezeigt ist, ist, dass unter bestimmten in den ISUP-Standards beschriebenen Umständen anstelle einer "Address Complete"-Nachricht eine "Connect"-Nachricht gesendet werden kann. Dies erfolgt dann, wenn die "Alert"-Nachricht ausbleibt. Außerdem kann auch eine "Call Progress"-Nachricht Verwendung finden, wenn sich während des Rufes Bedingungen ändern, wie zum Beispiel bei alternativen Diensten. Ein solches Ereignis wird von der Mobilstation 4 durch eine "Modify"-Nachricht initialisiert. Diese Nachrichten enthalten in einem optionalen Parameter "Access Transport" alle Informationen, die den zu benutzenden Übertragungsdienst vollständig beschreiben. Diese den zu benutzenden Übertragungsdienst vollständig beschreibenden Informationen können auch, wie angedeutet, über die Grenzen des Mobilfunknetzes hinaus weitergeleitet werden. In der Zugangs-Mobilvermittlungsstelle 2 sind nun die den zu benutzenden Übertragungsdienst vollständig beschreibenden Informationen verfügbar. Vorzugsweise wertet die Zugangs-Mobilvermittlungsstelle 2 die Informationen derart aus, dass die Zugangs-Mobilvermittlungsstelle 2 übertragungsdienstspezifische Funktionen ausführen kann. Dabei kann die Zugangs-Mobilvermittlungsstelle 2 beispielsweise den weiteren Rufaufbau beeinflussen, beispielsweise den Rufaufbau verhindern. Ferner können die den zu benutzenden Übertragungsdienst vollständig beschreibenden Informationen auch anderweitig wie beispielsweise für eine vorzunehmende Vergebührung zur Verfügung gestellt werden. Letztlich wird in einer "Connect Acknowledge"-Nachricht seitens der Ziel-Mobilvermittlungsstelle 2 der Rufaufbau bestätigt und Daten können übertragen werden.

## Patentansprüche

1. Verfahren zur Rückwärtssignalisierung eines bei einem aus einem ersten Telekommunikationsnetz aufzubauenden Ruf zu benutzenden Übertragungsdienstes, bei dem
- ein mobiles Endgerät (4) im Versorgungsbereich einer Ziel-Mobilvermittlungsstelle (2, Visited MSC) eines digitalen Mobilfunknetzes über eine Zugangs-Mobilvermittlungsstelle (1, Gateway MSC) aus dem ersten Telekommunikationsnetz angerufen wird und
- den zu benutzenden Übertragungsdienst vollständig beschreibende Informationen zwischen dem mobilen Endgerät (4) und der Ziel-Mobilvermittlungsstelle (2, Visited MSC) des digitalen Mobilfunknetzes ausgehandelt und in der Ziel-Mobilvermittlungsstelle (2, Visited MSC) hinterlegt werden, wobei die den zu benutzenden Übertragungsdienst vollständig beschreibenden Informationen zumindest ein PLMN-BC Informationselement umfassen,
**dadurch gekennzeichnet, dass**
- in der Ziel-Mobilvermittlungsstelle (2, Visited MSC) das PLMN-BC Informationselement der den zu benutzenden Übertragungsdienst vollständig beschreibenden Informa-tionen in ein ISUP-konformes ISDN-BC Informationselement umgewandelt wird und
- die den zu benutzenden Übertragungsdienst vollständig beschreibenden Informationen mit dem ISUP-konformen ISDN-BC Informationselement mittels mindestens einer ISUP-Nachricht zumindest zu der Zugangs-Mobilvermittlungsstelle (1, Gateway MSC) unter Bewirken der Rückwärtssignalisierung transportiert werden.

2. Verfahren nach Anspruch 1,
**dadurch gekennzeichnet,**
**dass** die den zu benutzenden Übertragungsdienst vollständig beschreibenden Informationen in einem optionalen Parameter "Access Transport" der mindestens einen ISUP-Nachricht zur Verfügung gestellt werden

3. Verfahren nach Anspruch 1 oder 2,
**dadurch gekennzeichnet,**
**dass** als ISUP-Nachricht eine sogenannte "Address Complete Message (ACM)", eine sogenannte "Answer Message (ANM)", eine sogenannte "Connect Message (CON) oder eine sogenannte "Call Progress Message (CPG)" verwendet wird.

4. Verfahren nach einem der vorhergehenden Ansprüche,
**dadurch gekennzeichnet,**
**dass** als erstes Telekommunikationsnetz ein ISDN-, ein PSTN- oder ein Mobilfunknetz (PLMN) verwendet wird.

5. Verfahren nach einem der vorhergehenden Ansprüche,
**dadurch gekennzeichnet,**
**dass** die den zu benutzenden Übertragungsdienst vollständig beschreibenden Informationen in der Zugangs-Mobilvermittlungsstelle (1, Gateway MSC) ausgewertet werden, um darin enthaltene übertragungsdienstspezifische Funktionen ausführen zu können.

6. Verfahren nach einem der vorhergehenden Ansprüche,
**dadurch gekennzeichnet,**
**dass** die den zu benutzenden Übertragungsdienst vollständig beschreibenden Informationen zusätzlich zu anderen in dem aufzubauenden Ruf involvierten Netzwerkknoten des digitalen Mobilfunknetzes oder des ersten Telekommunikationsnetzes transportiert werden.

7. Verfahren nach einem der vorhergehenden Ansprüche,
**dadurch gekennzeichnet,**
**dass** die den zu benutzenden Übertragungsdienst vollständig beschreibenden Informationen ein Low Layer Compatibility Informationselement (LLC) oder ein High Layer Compatibility Informationselement (HLC) umfassen.

## Claims

1. Method for backward-signaling of a transmission service which is to be used for a call which is to be set up from a first telecommunication network, in which
- a mobile terminal (4) in the service area of a destination mobile switching center (2, Visited MSC) in a digital mobile radio network is called from the first telecommunication network via an access mobile switching center (1, Gateway MSC), and
- information fully describing the transmission service which is to be used is negotiated between the mobile terminal (4) and the destination mobile switching center (2, Visited MSC) in the digital mobile radio network and is stored in the destination mobile switching center (2, Visited MSC), the information which fully describes the transmission service which is to be used comprising at least a PLMN-BC information element,
**characterized in that**
- the destination mobile switching center (2, Visited MSC) converts the PLMN-BC information element from the information fully describing the transmission service which is to be used into an ISUP-compliant ISDN-BC information element, and
- the information fully describing the transmission service which is to be used is transported, using at least one ISUP message, with the ISUP-compliant ISDN-BC information element at least to the access mobile switching center (1, Gateway MSC), so as to effect the backward signaling.

2. Method according to Claim 1,
**characterized**
**in that** the information fully describing the transmission service which is to be used is made available in an optional "Access Transport" parameter in the at least one ISUP message.

3. Method according to Claim 1 or 2,
**characterized**
**in that** the ISUP message used is an "Address Complete Message (ACM)", an "Answer Message (ANM)", a "Connect Message (CON)" or a "Call Progress Message (CPG)".

4. Method according to one of the preceding claims,
**characterized**
**in that** the first telecommunication network used is an ISDN network, a PSTN network or a mobile radio network (PLMN).

5. Method according to one of the preceding claims,
**characterized**
**in that** the information fully describing the transmission service which is to be used is evaluated in the access mobile switching center (1, Gateway MSC) in order to be able to execute transmission-service-specific functions contained therein.

6. Method according to one of the preceding claims,
**characterized**
**in that** the information fully describing the transmission service which is to be used is additionally transmitted to other network nodes in the digital mobile radio network or in the first telecommunication network which are involved in the call which is to be set up.

7. Method according to one of the preceding claims,
**characterized**
**in that** the information fully describing the transmission service which is to be used comprises a Low Layer Compatibility information element (LLC) or a High Layer Compatibility information element (HLC).

## Revendications

1. Procédé de signalisation de retour d'un service de transmission devant être utilisé lors d'un appel à établir à partir d'un premier réseau de télécommunication, dans lequel
- un terminal mobile (4) est appelé dans la zone de couverture d'un centre de commutation mobile de destination (2, Visited MSC) d'un réseau radio mobile numérique, via un centre de commutation mobile d'accès (1, Gateway MSC), à partir du premier réseau de télécommunication, et
- des informations décrivant de façon complète le service de transmission devant être utilisé, sont échangées entre le terminal mobile (4) et le centre de commutation mobile de destination (2, Visited MSC) du réseau radio mobile numérique et stockées dans le centre de commutation mobile de destination (2, Visited MSC), les informations décrivant de façon complète le service de transmission devant être utilisé comprenant au moins un élément d'information PLMN-BC,
**caractérisé en ce que**
- dans le centre de commutation mobile de destination (2, Visited MSC), l'élément d'information PLMN-BC des informations décrivant de façon complète le service de transmission devant être utilisé, est converti en un élément d'information ISDN-BC conforme à ISUP, et
- les informations décrivant de façon complète le service de transmission devant être utilisé, sont transportées avec l'élément d'information ISDN-BC conforme à ISUP, au moyen d'au moins un message ISUP, au moins vers le centre de commutation mobile d'accès (1, Gateway MSC) en produisant la signalisation de retour.

2. Procédé selon la revendication 1,
**caractérisé en ce que**
les informations décrivant de façon complète le service de transmission devant être utilisé, sont mises à la disposition dudit au moins un message ISUP dans un paramètre optionnel "Access Transport".

3. Procédé selon la revendication 1 ou 2,
**caractérisé en ce que**
comme message ISUP, un "Address Complete Message (ACM)", un "Answer Message (ANM)", un "Connect Message (CON)" ou un "Call Progress Message (CPG)" est utilisé.

4. Procédé selon l'une des revendications précédentes,
**caractérisé en ce que**
comme premier réseau de télécommunication, un réseau ISDN, un réseau PSTN ou un réseau radio mobile (PLMN) est utilisé.

5. Procédé selon l'une des revendications précédentes,
**caractérisé en ce que**
les informations décrivant de façon complète le service de transmission devant être utilisé, sont analysées dans le centre de commutation mobile d'accès (1, Gateway MSC) de manière à pouvoir réaliser des fonctions spécifiques de service de transmission contenues dans celui-ci.

6. Procédé selon l'une des revendications précédentes,
**caractérisé en ce que**
les informations décrivant de façon complète le service de transmission devant être utilisé, sont transportées également vers d'autres noeuds de réseau, impliqués dans l'appel à établir, du réseau radio mobile numérique ou du premier réseau de télécommunication.

7. Procédé selon l'une des revendications précédentes,
**caractérisé en ce que**
les informations décrivant de façon complète le service de transmission devant être utilisé, comprennent un élément d'information "Low Layer Compatibility (LLC)" ou un élément d'information "High Layer Compatibility (HLC)".
